# EUROPÄISCHE PATENTSCHRIFT

(11) **EP 3 807 820 B1**
(45) Veröffentlichungstag und Bekanntmachung des Hinweises auf die Patenterteilung: **27.11.2024**
(21) Anmeldenummer: 19731961.9
(22) Anmeldetag: 17.06.2019
(51) Int. Cl.: G06K 19/077

(54) **VERFAHREN ZUM HERSTELLEN EINES WERT- ODER SICHERHEITSDOKUMENTENROHLINGS MIT EINER ELEKTRONISCHEN SCHALTUNG, EIN WERT- ODER SICHERHEITSDOKUMENTENROHLING UND EIN SICHERHEITS- UND WERTDOKUMENT**
METHOD FOR PRODUCING A VALUE OR SECURITY DOCUMENT BLANK HAVING AN ELECTRONIC CIRCUIT, VALUE OR SECURITY DOCUMENT BLANK, AND SECURITY AND VALUE DOCUMENT
PROCÉDÉ DE FABRICATION D'UNE ÉBAUCHE DE DOCUMENT DE VALEUR OU DE SÉCURITÉ MUNIE D'UN CIRCUIT ÉLECTRONIQUE, ÉBAUCHE DE DOCUMENT DE VALEUR OU DE SÉCURITÉ ET DOCUMENT DE VALEUR OU DE SÉCURITÉ

(30) Priorität: 18.06.2018 DE 102018209818
(43) Veröffentlichungstag der Anmeldung: 21.04.2021
(73) Patentinhaber: Bundesdruckerei GmbH, 10969 Berlin (DE)
(72) Erfinder: FISCHER, Jörg, 10317 Berlin (DE); TIETKE, Markus, 12439 Berlin (DE); TRÖLENBERG, Stefan, 15749 Mittenwalde OT Ragow (DE)
(74) Vertreter: Patentanwälte Bressel und Partner mbB
(86) Internationale Anmeldenummer: PCT/EP2019/065863
(87) Internationale Veröffentlichungsnummer: WO 2019/243247

(56) Entgegenhaltungen:
- WO-A1-2007/031050
- DE-A1- 102012 004 365
- DE-A1- 102012 223 472
- DE-A1- 102014 204 553
- DE-A1- 102015 204 018

## Beschreibung

Die Erfindung betrifft ein Verfahren zum Herstellen eines Wert- oder Sicherheitsdokumentenrohlings mit einer elektronischen Schaltung, einen Wert- oder Sicherheitsdokumentenrohling und ein Sicherheits- und Wertdokument auf Grundlage eines solchen Wert- oder Sicherheitsdokumentenrohlings. Insbesondere betrifft die Erfindung ein Verfahren zum Herstellen eines Wert- oder Sicherheitsdokumentenrohlings mit mindestens einem (integrierten) biometrischen Sensor, einem Sicherheitscontroller und mindestens einem visuellen Rückkopplungselement.

Wert- oder Sicherheitsdokumente dienen beispielsweise zur Identifikation von Personen und/oder Gegenständen und/oder zum bargeldlosen Zahlungsverkehr. Sie weisen unter anderem visuell erkennbare Merkmale auf, die sie eindeutig einer Person und/oder einem Gegenstand und/oder einem Geld- oder Wertpapierkonto zuordnen und die nur dem Dokumenteninhaber erlauben, sich auszuweisen bzw. über den Gegenstand bzw. das Konto zu verfügen und beispielsweise Geldtransfers zu veranlassen. Aus diesem Grunde müssen diese Dokumente gegen Missbrauch geschützt werden. Hierzu können sie beispielsweise einen Fingerabdrucksensor, über die sich der Benutzer beim Gebrauch der Karte authentifizieren kann, sowie visuelle Rückkopplungselemente, beispielsweise eine Anzeigevorrichtung, aufweisen.

Üblicherweise werden ID-Dokumente aus Kunststoffmaterialien hergestellt, um deren notwendige Flexibilität zu gewährleisten. Häufig werden Wert- oder Sicherheitsdokumente durch eine Lamination einer Mehrzahl teilweise graphisch gestalteter Polymerfolien, beispielsweise von Polycarbonatfolien, in einer Heiß/Kalt-Laminierpresse im Bogen-Mehrfachformat oder auch in einem Durchlauf-Laminierverfahren mit mehreren hintereinander angeordneten Heiz- und Kühl-Press-Stationen hergestellt. In den Dokumenten enthaltene elektronische Bauelemente sind üblicherweise auf einer Schaltungsträgerlage montiert, die zusammen mit weiteren Dokumentenlagen zu dem Laminat verbunden werden. Hierbei können die Bauelemente lediglich auf einer Seite der Schaltungsträgerlage oder auch auf beiden Seiten der Schaltungsträgerlage montiert sein. Die Bauelemente sind über Leiterbahnen miteinander elektrisch kontaktiert.

Hierzu geht beispielsweise aus DE 10 2013 102 003 A1 ein Chipkartenmodul hervor, das als Bestandteil einer Chipkarte verwendbar ist. Das Modul weist einen Chipkartenmodulträger, beispielsweise aus FR4-Material, auf. Auf dem Träger sind eine Verdrahtungsstruktur, ein integrierter Schaltkreis und eine Chipkarten-Modulantenne angeordnet, wobei der integrierte Schaltkreis und die Antenne mit der Verdrahtungsstruktur elektrisch gekoppelt sind, sowie eine Leuchtvorrichtung, welche auf dem Träger angeordnet ist und mit der Verdrahtungsstruktur elektrisch gekoppelt ist.

In DE 10 2012 223 472 A1 ist ferner ein Wert- und/oder Sicherheitsdokument beschrieben, das eine Antennenstruktur aufweist. Zur Herstellung des Dokuments wird die Antennenstruktur auf einen Trägerkörper, der als Kunststofflage beispielsweise aus Polyimid ausgebildet sein kann, aufgebracht. Ferner kann auf dem Trägerkörper auch ein elektronisches Bauelement angeordnet sein, beispielsweise ein Halbleiterbauelement. Des Weiteren können auch Submodule als Chipträger, basierend auf flexiblen Leiterplatten (Interposa), zum Beispiel aus Polyimid oder FR4 verwendet werden.

In DE 10 2014 204 552 A1 ist ein in einen Rohling eines Wert- oder Sicherheitsdokuments integrierbares Anzeigemodul beschrieben. Das Anzeigemodul weist einen Träger und mindestens einen darauf angeordneten Schaltkreis auf. Der Schaltkreis ist durch mindestens eine Antennenleiterbahn und mindestens ein mit der mindestens einen Antennenleiterbahn elektrisch verbundenes Anzeigeelement gebildet. Als Substratmaterial für den Träger für die Antennenleiterbahn ist unter anderem FR4 genannt.

In DE 10 2009 060 862 ist ein Verfahren zum Laminieren von Folienlagen offenbart, bei dem eine mit einem elektronischen Bauelement bestückte Trägerfolienlage, eine Fließfolienlage und eine Ausgleichsfolienlage gestapelt und unter Bildung eines Folienlaminats miteinander laminiert werden. Es wird angegeben, dass die Folienlagen vorzugsweise aus thermoplastischem Kunststoff bestehen. Typische Materialen, aus denen die Folienlagen bestehen, sind Polycarbonat, Polyvinylchlorid, Polyester, beispielsweise PET, Polyolefine, beispielsweise PE und PP, Acrylnitril-Butadien-StyrolCopolymer, Polyurethan und Polyetheretherketon.

In DE 25 12 085 B2 ist ein Gemisch eines Epoxidharzes mit einem Bismaleimid/Triazin-Harz beschrieben.

Um eine verbesserte Stabilität von Dokumenten mit integrierten elektronischen Schaltungen zu schaffen, ist ferner ein Sicherheit- oder Wertdokument aus der DE 10 2015 222 364 A1 bekannt. Zum Schutz der elektronischen Schaltung bei Benutzung des Wert- oder Sicherheitsdokuments und um zu gewährleisten, dass die elektronischen Bauelemente und deren elektrische Verbindungen auf einem Schaltungsträger in genügendem Umfang gegen mechanische Schädigungen geschützt sind, werden die das Wert- oder Sicherheitsdokument bildenden Dokumentenlagen aus einem Faserverbundwerkstoff gebildet. Die Verwendung von Faserverbundwerkstoffen beim Ausbilden der Dokumentenlagen des Wert- oder Sicherheitsdokuments führt jedoch zu einem erhöhten Aufwand bei der Herstellung des Wert- oder Sicherheitsdokuments und in der Folge zu erhöhten Fertigungskosten.

Aus der WO 2007/031050 A1 ist ein Chipmodul zur Herstellung kontaktloser Chipkarten mit einem Chipträger bekannt, der auf einem Substrat mit inneren und äußeren Kontakten versehen ist, wobei die inneren Kontakte mit Anschlussflächen einer auf dem Chipträger angeordneten Chipeinheit kontaktiert sind und die äußeren Kontakte zur Kontaktierung mit einer Antenne dienen, wobei die Chipeinheit sandwichartig zwischen dem Substrat und einer faserverstärkten Abdecklage aufgenommen ist, derart, dass die Abdecklage benachbart zumindest zweier gegenüberliegender Seitenkanten der Chipeinheit mit dem Substrat verbunden ist. Ferner ist ein Verfahren zur Herstellung eines Chipmoduls bekannt. Der unabhängige Geräteanspruch ist gegen dieses Dokument abgegrenzt.

Von daher liegt der vorliegenden Erfindung die Aufgabe zugrunde, einen Wert- oder Sicherheitsdokumentenrohling mit einer elektronischen Schaltung für ein Wert- oder Sicherheitsdokument zu schaffen, bei dem die elektronische Schaltung gegen mechanische Beschädigungen geschützt ist, gleichzeitig aber ein Aufwand bei der Herstellung reduziert ist.

### Definitionen

Soweit in der Beschreibung und in den Ansprüchen der vorliegenden Anmeldung der Begriff Wert- oder Sicherheitsdokument' verwendet wird, ist darunter beispielsweise ein Personalausweis, Führerschein, ein Zugangskontrollausweis oder ein anderes ID-Dokument, beispielsweise eine ID-Karte, ein Fahrzeugschein, eine Scheck-, Bank-, Kredit- oder Barzahlungskarte, Kundenkarte, Gesundheitskarte, ein Firmenausweis, Berechtigungsnachweis, Mitgliedsausweis, Geschenk- oder Einkaufsgutschein oder ein sonstiger Berechtigungsnachweis oder noch ein anderes Wert- oder Sicherheitsdokument zu verstehen.

Das Wert- oder Sicherheitsdokument ist dadurch gekennzeichnet, dass es authentifizierende Informationen enthält, beispielsweise Informationen über die Person oder die Sache, der das Dokument zugeordnet ist, oder Informationen, mit denen seine Echtheit verifiziert werden kann. Beispielsweise kann das Wert- oder Sicherheitsdokument mindestens einen ohne optische Hilfsmittel sichtbaren oder ausschließlich maschinell lesbaren Aufdruck aufweisen, der für die Person, der das Dokument zugewiesen ist, personalisierend ist oder der die Echtheit des Dokuments bezeugt. Alternativ oder zusätzlich können auch individualisierende Daten in einem elektronischen Datenspeicher in dem Dokument enthalten sein. Oder das Dokument kann mindestens ein anderes mit optischen Mitteln lesbares Sicherheitselement und/oder ein taktiles Sicherheitselement aufweisen, das eine eindeutige Zuordnung des Dokuments zu einer Person oder den Nachweis für dessen Echtheit erlaubt.

Soweit in der Beschreibung und in den Ansprüchen der vorliegenden Anmeldung der Begriff elektronisches Bauelement' verwendet wird, ist hierunter jedes beliebige aktive oder passive elektronische Bauelement zu verstehen, insbesondere ein Halbleiterbauelement, das nachfolgend auch als 'IC' oder 'Chip' bezeichnet sein kann. Unter einem Halbleiterbauelement oder IC oder Chip ist beispielsweise ein ungehäuster Halbleiterchip (bare die) oder ein gehäuster Halbleiterchip, beispielsweise in Form eines Surface Mount Device (SMD), eines Chip Scale Package (CSP) oder einer der folgenden Bauformen: DIP, TQFP, MLF, SOTP, SOT, PLCC, QFN, SSOT, BGA, MOB, oder ein Chipmodul zu verstehen. Falls der Chip ungehäust ist, kann er gedünnt eingesetzt sein.

Soweit in der Beschreibung und in den Ansprüchen der vorliegenden Anmeldung die Begriffe ,individualisierend`, ,individualisiert`, ,personalisierend` und ,personalisiert` verwendet werden, so ist darunter zu verstehen, dass sich das Wert- oder Sicherheitsdokument, auf das sich der Begriff bezieht, von anderen Wert- oder Sicherheitsdokumenten unterscheidet und dieses Wert- oder Sicherheitsdokument einer Entität (im Falle der Begriffe ,individualisierend` oder ,individualisiert`), insbesondere einer Person (im Falle der Begriffe ,personalisierend` oder ,personalisiert'), zuordnet. Das Wert- oder Sicherheitsdokument kann anstelle einer Person auch einem Gegenstand, wie einem Kraftfahrzeug, Verkaufsprodukt (in diesem Falle ist das Wert- oder Sicherheitsdokument beispielsweise eine Verpackung oder ein Etikett, Label, Anhänger, Aufkleber oder das Produkt selbst) oder einem Wertpapier, zugeordnet werden. Durch die Individualisierung bzw. Personalisierung erkennt ein Dritter die eindeutige Zuordnung des Wert- oder Sicherheitsdokuments zu der Entität oder Gruppen von gleichartigen oder ähnlichen Entitäten.

Soweit in der Beschreibung und in den Ansprüchen der vorliegenden Anmeldung die Begriffe ,Laminieren` und ,Lamination` verwendet werden, so ist darunter das flächige Verbinden von zwei Lagen unter Einwirkung von Druck und Wärmeeinbringung zu verstehen, wobei kein Klebermaterial zwischen den beiden zu verbindenden Lagen verwendet wird. Beim Laminieren bildet sich durch Erweichen bzw. Flüssigwerden der Lagenmaterialien eine monolithische Verbindung zwischen den Lagen, d.h. eine Grenzfläche ist nach dem Laminieren nicht erkennbar.

### Grundzüge der Erfindung und bevorzugte Ausführungsformen

Die technische Aufgabe wird erfindungsgemäß durch ein Verfahren mit den Merkmalen des Patentanspruchs 1 und ein Wert- oder Sicherheitsdokumentenrohling mit den Merkmalen des Patentanspruchs 2 gelöst. Vorteilhafte Ausgestaltungen der Erfindung ergeben sich aus den Unteransprüchen.

Die Grundidee der Erfindung ist, ein hochintegriertes und robustes kompaktes Modul zu schaffen, in dem die elektronische Schaltung untergebracht ist und dieses Modul in einen herkömmlichen mobilen Token einzubringen. Das kompakte Modul umfasst erfindungsgemäß eine erste Dokumentenlage in Form einer die elektronische Schaltung tragenden Schaltungsträgerlage und mindestens eine zweite Dokumentenlage. Die erste Dokumentenlage und die mindestens eine zweite Dokumentenlage sind aus einem Faserverbundwerkstoff gebildet. Die erste Dokumentenlage und die mindestens eine zweite Dokumentenlage sind gestapelt angeordnet. Die Dokumentenlagen sind unlösbar zu dem kompakten Modul gefügt, insbesondere laminiert, sodass das kompakte Modul ausreichend gegen mechanische Beanspruchung geschützt ist. Das kompakte Modul ist in eine hierzu vorgesehene zur Form des kompakten Moduls komplementäre Aussparung in dem mobilen Token angeordnet und mit diesem verbunden. Der mobile Token und das darin angeordnete kompakte Modul bilden den Wert- oder Sicherheitsdokumentenrohling.

Zur Herstellung des erfindungsgemäßen Wert- oder Sicherheitsdokumentenrohlings wird insbesondere ein Verfahren zum Herstellen eines Wert- oder Sicherheitsdokumentenrohlings mit einer elektronischen Schaltung zur Verfügung gestellt, umfassend die folgenden Schritte:
(a) Bereitstellen eines mobilen Token,
(b) Herstellen eines kompakten Moduls, umfassend die folgenden Teilschritte:
   (b1) Bereitstellen einer ersten Dokumentenlage in Form einer die elektronische Schaltung tragenden Schaltungsträgerlage und mindestens einer zweiten Dokumentenlage, wobei die erste Dokumentenlage und die mindestens eine zweite Dokumentenlage aus einem Faserverbundwerkstoff gebildet sind,
   (b2) Stapeln der Dokumentenlagen,
   (b3) Unlösbares Fügen der ersten Dokumentenlage und der mindestens einen zweiten Dokumentenlage zu einem kompakten Modul,
(c) Ausbilden einer zum kompakten Modul komplementären Aussparung auf einer Außenseite des mobilen Token,
(d) Anordnen des kompakten Moduls in der Aussparung in dem mobilen Token und Verbinden mit dem mobilen Token.

Ferner wird insbesondere ein Wert- oder Sicherheitsdokumentenrohling mit einer elektronischen Schaltung geschaffen, umfassend: einen mobilen Token, ein kompaktes Modul, wobei das kompakte Modul eine erste Dokumentenlage in Form einer die elektronische Schaltung tragenden Schaltungsträgerlage und mindestens eine zweite Dokumentenlage umfasst, wobei die erste Dokumentenlage und die mindestens eine zweite Dokumentenlage aus einem Faserverbundwerkstoff gebildet sind, wobei die erste Dokumentenlage und die mindestens eine zweite Dokumentenlage gestapelt angeordnet sind und wobei die erste Dokumentenlage und die mindestens eine zweite Dokumentenlage unlösbar zu dem kompakten Modul gefügt sind; und wobei das kompakte Modul in einer zum kompakten Modul komplementären Aussparung auf einer Außenseite des mobilen Token angeordnet und mit dem mobilen Token verbunden ist.

Der Vorteil des erfindungsgemäßen Wert- oder Sicherheitsdokumentenrohlings und des zugehörigen Herstellungsverfahrens ist, dass der mobile Token nicht mehr aus einem Faserverbundwerkstoff hergestellt werden muss. Lediglich das kompakte Modul mit der integrierten elektronischen Schaltung muss mit Hilfe eines Faserverbundwerkstoffes hergestellt und verstärkt werden. Hierdurch können trotz gewährleisteter Stabilität für die elektronische Schaltung ein Herstellungsaufwand und Fertigungskosten eingespart werden, da deutlich weniger Bereiche existieren, die aus Faserverbundwerkstoffen hergestellt sind bzw. hergestellt werden.

Eine Schaltungsträgerlage trägt bzw. umfasst mehrere separat gehauste elektronische Bauelemente sowie die Bauelemente verbindende Leiterbahnen. Die elektronischen Bauelemente bilden insbesondere einen logischen Schaltkreis aus. Die elektronischen Bauelemente können sowohl passiv als auch aktiv sein. Insbesondere sind die elektronischen Bauelemente über eine, insbesondere gesamte, Fläche der Schaltungsträgerlage verteilt aufgebracht. Die elektronischen Bauelemente und Leiterbahnen können hierbei sowohl auf einer Oberseite als auch auf einer Unterseite der Schaltungsträgerlage angeordnet sein.

Die elektronische Schaltung des Wert- oder Sicherheitsdokumentenrohlings ist zur Speicherung von individualisierenden Daten ausgebildet. Hierdurch ergibt sich die Möglichkeit einer außerordentlich hohen Datensicherheit, da das Enrolment auf dem Wert- oder Sicherheitsdokumentenrohling stattfindet und die Daten nur in dem Wert- oder Sicherheitsdokumentenrohling bzw. dem fertigen Wert- oder Sicherheitsdokument aufgenommen, sicher gespeichert und verifiziert werden. Daher verlassen sensible Daten das Dokument nicht.

Insbesondere kann vorgesehen sein, dass ein mittels des beschriebenen Verfahrens hergestellter Wert- oder Sicherheitsdokumentenrohling im Anschluss individualisiert wird. Beispielsweise können authentifizierende Informationen aufgedruckt, eingelasert oder einbelichtet werden. Insbesondere können authentifizierende Informationen in einem Speicher der elektronischen Schaltung eingebracht werden. Durch das Individualisieren entsteht ein Wert- oder Sicherheitsdokument.

Es wird somit ferner ein Wert- oder Sicherheitsdokument geschaffen, umfassend einen erfindungsgemäßen Wert- oder Sicherheitsdokumentenrohling, wobei der Wert- oder Sicherheitsdokumentenrohling zum Ausbilden des Wert- oder Sicherheitsdokuments individualisiert ist.

Der zum Ausbilden des kompakten Moduls verwendete Faserverbundwerkstoff ist vorzugsweise nicht schmelzbar. Darunter ist vorliegend zu verstehen, dass der Werkstoff nicht ohne Zersetzung schmelzbar ist. Der Werkstoff kann also nicht ohne Veränderung seiner chemischen Zusammensetzung in einen flüssigen Zustand übergehen, wenn auch der Werkstoff eine Glasübergangstemperatur aufweisen kann, bei der der Werkstoff von einem spröden Glaszustand in einen weichen gummielastischen Zustand übergeht. Bei der Herstellung wird zwar ein Laminierverfahren angewendet, bei dem die Lagenkomponenten zeitweilig verflüssigt werden. Durch eine chemische Reaktion (Polymerisation) erstarrt (härtet) das Material aber und ist daher anschließend nicht mehr schmelzbar.

Der Faserverbundwerkstoff kann daher insbesondere mit einem nicht thermoplastischen, bevorzugter Weise mit einem duroplastischen, Matrix-Werkstoff, ganz besonders bevorzugt Polymerwerkstoff, gebildet sein. Der Polymerwerkstoff kann beispielsweise auf der Basis eines bi- oder höherfunktionellen Epoxidharzes, insbesondere auf Basis von Bisphenol A, oder eines Gemisches eines Epoxidharzes mit einem Bismaleimid/Triazin-Harz hergestellt sein. Letzteres ist beispielsweise in DE 25 12 085 B2 beschrieben. Alternativ kann auch ein Phenolharz, einschließlich Phenolharz vom Novolak-Typ, ferner in Form von Polyimid oder einem fluorierten Polymer, wie einem Polymer aus Tetrafluorethylen, das beispielsweise unter dem Namen Teflon^{®} (Marke von DuPont, USA) bekannt ist, bereitgestellt werden.

Das Fasermaterial des Faserverbundwerkstoffes ist vorzugsweise durch Glasfasern gebildet. Alternativ können auch Fasern aus anderen Materialien, wie Quarz, Aramid, Kohlenstoff (Carbonfasern, zum Beispiel mit Carbonfasern verstärkter Kunststoff (CFK)), gereckten Polymerfasern, beispielsweise Polyesterfasern, und dergleichen eingesetzt werden. Die Fasern können in ungeordneter Form in dem Verbundwerkstoff enthalten sein, indem beispielsweise ein Faserfilz zusammen mit dem Matrix-Werkstoff getränkt und letzterer ausgehärtet wird. Alternativ können die Fasern dem Matrix-Werkstoff auch in vereinzelter Form zugegeben werden, bevor dieser dann ausgehärtet wird. Vorteilhafter Weise liegen die Fasern in dem Matrix-Werkstoff in Form eines Gewebes vor, beispielsweise in Form von Gewebematten, insbesondere Glas-Gewebematten, die mit dem Matrix- Werkstoff getränkt sind, bevor dieser dann ausgehärtet wird. Derartige mit vorpolymerisiertem Epoxidharzmaterial getränkte Glas-Gewebematten sind als Prepregs bekannt.

In einer bevorzugten Weiterbildung der vorliegenden Erfindung ist der Faserverbundwerkstoff der ersten und der mindestens einen zweiten sowie gegebenenfalls weiteren Dokumentenlagen des kompakten Moduls aus einem mit Glasfasergewebe verstärkten Duroplast, beispielsweise auf der Basis eines Epoxidharzes, gebildet. Derartige Materialien sind wegen ihrer Eigenschaften gegenüber chemischen, mechanischen und thermischen Beeinflussungen äußerst resistent. Außerdem haben diese Materialien auch hervorragende elektrische Eigenschaften, die sich für die Anwendung als Wert- oder Sicherheitsdokument mit einer elektrischen Schaltung besonders anbieten. Insbesondere die mechanische Stabilität, beispielsweise Dimensionsstabilität gegen Biegebeanspruchung, ist bei derartigen Materialien aufgrund der Kombination eines nicht schmelzbaren Materials durch Auswahl eines Duroplasts und der Einbettung eines Glasfasergewebes in das Polymermaterial hervorragend.

Als besonders bevorzugte Materialien sind FR4-, FR5- und FR5/BT-Material verwendbar. FR4 wird aus mit bifunktionellem Epoxidharz getränkten Glasfasergewebematten hergestellt und ist aufgrund der Bromierung des Harzes flammhemmend. FR5- Material unterscheidet sich davon durch die Verwendung von höherfunktionellen Epoxidharzen (tetra-, multifunktionellen Harzen). FR5/BT-Material enthält zusätzlich Bimaleimid/Triazin-Harz. Die T_{g}-Punkte (Glasübergangstemperaturen) dieser Materialien steigen in der Reihe T_{g}(FR4) < T_{g}(FR5) < T_{g}(FR5/BT) an. Durch Verwendung von FR5 oder sogar FR5/BT kann eine höhere thermische Belastbarkeit erreicht werden.

Die zum kompakten Modul komplementäre Aussparung auf der Außenseite des mobilen Token wird beispielsweise durch Fräsen ausgebildet. Hierzu wird die komplementäre Aussparung im Anschluss an den Fügeschritt, insbesondere der Lamination, beispielsweise mittels eines "Card Milling"-Verfahrens ausgefräst. Anschließend wird das Modul mittels "Chip-Implanting" in den mobilen Token eingefügt.

Der Vorteil ist, dass das erfindungsgemäße Verfahren und der erfindungsgemäße Wert- oder Sicherheitsdokumentenrohling in bereits bestehende Prozessketten integriert werden können, da auf bekannte und etablierte Fertigungstechniken und -stufen zurückgegriffen werden kann.

Bevorzugt werden die Verfahrensschritte (b1) bis (b3) zum Herstellen des kompakten Moduls für mehrere kompakte Module gleichzeitig durch Herstellen eines Mehrfachnutzens durchgeführt. Im Gegensatz zu der Herstellung von Wert- oder Sicherheitsdokumenten, welche komplett aus Faserverbundwerkstoffen hergestellt sind, kann eine aus einem solchen Mehrfachnutzen erzeugte Stückzahl an kompakten Modulen deutlich gesteigert werden. Beispielsweise stehen einer auf einem Mehrfachnutzen üblichen Stückzahl von 16 Wert- oder Sicherheitsdokumenten etwa 100 kompakte Module auf dem gleichen Mehrfachnutzen gegenüber. Jedes der etwa 100 kompakten Module kann anschließend in einen kostengünstigen mobilen Token eingebracht werden, der ohne die aufwendige Verwendung von Faserverbundwerkstoffen hergestellt wurde. Der Aufwand bei der Herstellung ist somit deutlich reduziert. Hierdurch können wiederum Kosten eingespart werden.

In einer Ausführungsform weist der Wert- oder Sicherheitsdokumentenrohling mindestens eine dritte Dokumentenlage aus einem Faserverbundwerkstoff auf, wobei die erste Dokumentenlage zwischen der mindestens einen zweiten und der mindestens einen dritten Dokumentenlage angeordnet ist bzw. angeordnet wird. Hierdurch können die erste Dokumentenlage, das heißt die Schaltungsträgerlage und darauf angeordnete elektronische Bauelemente, verbessert vor mechanischen Einflüssen geschützt werden. Insbesondere wenn sowohl eine Oberseite als auch eine Unterseite der ersten Dokumentenlage, das heißt der Schaltungsträgerlage, elektronische Bauelemente tragen, können die elektronischen Bauelemente hierdurch auf beiden Seiten geschützt werden. Das Anordnen erfolgt beispielsweise im Rahmen des Verfahrensschritts (b2).

In einer Ausführungsform ist vorgesehen, dass eine Schichtdicke der mindestens einen zweiten Dokumentenlage und/oder eine Schichtdicke der mindestens einen dritten Dokumentenlage derart gewählt ist oder gewählt wird, dass diese nach dem Zusammenfügen einer Abmessung eines ausgezeichneten elektronischen Bauelementes auf der jeweils relevanten Seite der ersten Dokumentenlage zuzüglich 30 %, bevorzugt 20 %, besonders bevorzugt 10 % entspricht. Die Abmessung wird hierbei insbesondere in Richtung einer Lagenfolge der Dokumentenlagen gemessen. Das ausgezeichnete elektronische Bauelement ist insbesondere ein mittels der zweiten oder der dritten Dokumentenlage zu überdeckendes elektronisches Bauelement mit der größten Ausdehnung in Richtung der Lagenfolge. Hierdurch kann eine optimale Kombination zwischen einem guten mechanischen Schutz der Bauelemente, einer guten mechanischen Festigkeit des kompakten Moduls und einer geringen Dicke der Dokumentenlagen und des kompakten Moduls bereitgestellt werden.

In einer bevorzugten Ausführungsform weist die elektronische Schaltung des kompakten Moduls mindestens einen biometrischen Sensor, einen Sicherheitscontroller und mindestens ein visuelles Rückkopplungselement auf. Der biometrische Sensor kann beispielsweise ein Sensor zum Erfassen eines Fingerabdrucks eines Benutzers sein. Der Sicherheitscontroller sichert komplexe Schaltungen gegen eine Manipulation ab, wobei er die Ausführung kryptografischer Operationen ermöglicht, sowie einen sicheren Datenspeicher und sichere Verarbeitungsfunktionen bereitstellt. Hierdurch ist der Sicherheitscontroller in der Lage, physischen und logischen Angriffen zu widerstehen. Das Rückkopplungselement dient dazu, einem Nutzer eine visuelle Rückmeldung darüber zu geben, ob eine bestimmte Funktion, beispielsweise eine Authentifizierung mittels des biometrischen Sensors, erfolgreich durchgeführt wurde oder nicht. Das Rückkopplungselement kann den Nutzer auch auffordern eine Handlung durchzuführen, z.B. den Finger aufzulegen.

Eine typische Anwendung eines auf Grundlage eines solchen Wert- oder Sicherheitsdokumentenrohlings durch Individualisierung erstellten Wert- oder Sicherheitsdokuments wird im Folgenden beschrieben. Ein Nutzer will sich mit Hilfe des Wert- oder Sicherheitsdokuments authentifizieren, beispielsweise will er Zugang zu einem gesicherten Bereich in einem Gebäude erlangen. Die Authentifizierung erfolgt mittels einer 2-Faktor-Authentifizierung. Um Zutritt zum gesicherten Bereich zu erlangen, muss der Nutzer sowohl über das Wert- oder Sicherheitsdokument, beispielsweise in Form einer Dokumentenkarte (1. Faktor), als auch über den richtigen Fingerabdruck (2. Faktor) verfügen. Am Kontrollpunkt hält der Nutzer das Wert- oder Sicherheitsdokument an ein hierfür vorgesehenes Lesegerät, welches im Rahmen einer drahtlosen Kommunikation (RFID) die elektronische Schaltung in dem kompakten Modul des Wert- oder Sicherheitsdokuments mit Energie versorgt und mit dem Sicherheitscontroller eine Datenkommunikation aufbaut, beispielsweise über eine hierfür vorgesehene Antenne in dem mobilen Token. Das Lesegerät erfasst, dass das individualisierte Wert- oder Sicherheitsdokument vorliegt und stellt hierdurch das Vorliegen des 1. Faktors fest. Jetzt muss der zugehörige Fingerabdruck abgefragt werden. Dies wird beispielsweise durch eine entsprechende Rückmeldung über das visuelle Rückkopplungselement signalisiert. Der Nutzer weiß nun, dass er seinen Finger auf den biometrischen Sensor, in diesem Fall einen Fingerabdrucksensor, legen muss. Ist dies geschehen, erfasst der Fingerabdrucksensor den Fingerabdruck und übermittelt das Ergebnis an das Lesegerät, vorzugsweise verschlüsselt. Das Erfassen und der erfolgreiche Abschluss des Erfassens wird ebenfalls durch Rückmeldung über das visuelle Rückkopplungselement signalisiert. Das Lesegerät überprüft den Fingerabdruck als 2. Faktor. Stimmt die Kombination aus 1. Faktor und 2. Faktor überein, wird dem Nutzer der Zugang zu dem gesicherten Bereich des Gebäudes gewährt, andernfalls wird der Zugang verweigert.

In einigen Ausführungsformen kann vorgesehen sein, dass der mindestens eine biometrische Sensor erst nach dem Ausbilden des kompakten Moduls angeordnet und mit den restlichen Elementen der elektronischen Schaltung verbunden wird. Hierzu kann das kompakte Modul eine Sensoraussparung aufweisen. Diese Sensoraussparung kann beispielsweise eingefräst werden bzw. kann eingefräst sein.

Mittels des kompakten Moduls kann eine kontaktlose, batterielose Funktion nach ISO 14443 oder NFC realisiert werden.

In einer Ausführungsform ist vorgesehen, dass als mobiler Token eine Dokumentenkarte aus Kunststoffmaterial verwendet wird bzw. der mobile Token eine Dokumentenkarte aus Kunststoffmaterial ist. Die Dokumentenkarte kann insbesondere eine Smartcard sein. Die Dokumentenkarte kann im Format ID-1, ID-2, ID-3, ID-T oder in irgendeinem anderen normierten oder nicht normierten Format vorliegen, beispielsweise in Kartenform. Hierzu wird auf die einschlägige Norm ISO/IEC 7810 in der am Anmeldetag gültigen Fassung hingewiesen. Vorzugsweise ist das Format des Dokuments ID-1. Das Wert- oder Sicherheitsdokument soll den normierten Anforderungen genügen, beispielsweise ISO 10373, ISO/IEC 7810, ISO 14443 sowie gegebenenfalls der noch im Entwurf befindlichen Norm ISO/DIS 18328-2 in den am Anmeldetag jeweils gültigen Fassungen.

Es kann vorgesehen sein, dass an das kompakte Modul eine karteninterne kontaktbehaftete Schnittstelle gemäß ISO 7816 angeschlossen ist, sodass eine Verwendung als Bankkarte ermöglicht wird.

In einer anderen Ausführungsform ist vorgesehen, dass als mobiler Token ein Ring verwendet wird bzw. dass der mobile Token ein Ring ist. Hierbei kann es sich beispielsweise um einen Ring für einen Finger handeln, der an einer Hand getragen wird und in den das kompakte Modul integriert wird oder integriert ist.

In anderen Ausführungsformen können auch andere mobile Token verwendet werden, beispielsweise Schlüsselanhänger, Halsbänder, Armbänder, Broschen etc.

In einigen Ausführungsformen ist vorgesehen, dass der mobile Token eine Antenne umfasst, wobei die Antenne über hierfür vorgesehene elektrische Kontakte mit der elektronischen Schaltung verbunden ist. Die Antenne kann mittels Drucktechnik, Drahtlegetechnik, Ätztechnik, Schleiftechnik oder sonstigen bekannten Verfahren hergestellt sein.

Im Herstellungsverfahren ist vorgesehen, dass die Antenne während des Anordnens des kompakten Moduls in der Aussparung des mobilen Tokens mit der elektronischen Schaltung verbunden wird.

In einer Ausführungsform ist hierfür vorgesehen, dass die Antenne über hierfür vorgesehene elektrische Kontakte mit der elektronischen Schaltung verbunden ist bzw. wird. Beispielsweise sind auf einer Unterseite des kompakten Moduls zwei Kontakte zum Kontaktieren der Antenne vorgesehen. Auf einer Oberseite innerhalb der Aussparung im mobilen Token befinden sich entsprechend komplementäre Kontakte der Antenne. Durch Anordnen des kompakten Moduls in der Aussparung in dem mobilen Token werden die Kontakte miteinander verbunden. Die elektrische Verbindung der Kontakte kann durch Löten, Schweißen, Crimpen oder Verwendung leitfähiger Kleber realisiert werden.

In einer alternativen Ausführungsform ist hingegen vorgesehen, dass die Antenne über hierfür vorgesehene induktive Kopplungselemente mit der elektronischen Schaltung verbunden ist bzw. verbunden wird. Hierzu umfassen sowohl die elektronische Schaltung in dem kompakten Modul als auch die Antenne induktive Kopplungselemente. Eines dieser Kopplungselemente befindet sich beispielsweise im Bereich der Aussparung des mobilen Tokens. Ein anderes induktives Kopplungselement befindet sich entsprechend in dem kompakten Modul, sodass die Kopplungselemente zueinander benachbart angeordnet sind, wenn das kompakte Modul in der Aussparung angeordnet wird oder ist. Nach dem Anordnen besteht eine induktive Kopplung zwischen der Antenne in dem mobilen Token und der elektronischen Schaltung, ohne dass ein galvanischer Kontakt hergestellt werden muss. Da keine galvanischen bzw. elektrischen Kontakte ausgebildet werden müssen, ermöglicht dies insbesondere eine vereinfachte Anordnung des kompakten Moduls in der komplementären Aussparung im mobilen Token. Hierdurch kann ein Aufwand bei der Herstellung reduziert werden, sodass Kosten eingespart werden können. Die Antenne in dem mobilen Token kann dann beispielsweise als Verstärkerantenne dienen.

In anderen Ausführungsformen kann vorgesehen sein, dass die elektronische Schaltung in dem kompakten Modul eine Antenne umfasst. In diesem Fall müssen keine weiteren Kontaktierungen vorgenommen werden.

Über die Antenne in dem Wert- oder Sicherheitsdokumentenrohling kann sowohl eine drahtlose Energieversorgung der elektronischen Schaltung als auch ein Datenaustausch mit einer außerhalb des Wert- oder Sicherheitsdokumentenrohlings bzw. des Wert- oder Sicherheitsdokuments liegenden Sende- und Empfangsstation erfolgen.

In einer bevorzugten Ausführungsform ist vorgesehen, dass das kompakte Modul in eine T-Form gebracht wird bzw. eine T-Form aufweist. Die T-Form bedeutet, dass das kompakte Modul auf der dem mobilen Token zugewandten Seite über eine bestimmte Materialdicke hinweg eine geringere Ausdehnung aufweist als auf der dem mobilen Token abgewandten Seite, sodass im Querschnitt eine T-artige Form vorliegt. Die T-Form kann insbesondere umlaufend ausgebildet sein, das heißt, das kompakte Modul weist einen umlaufenden Absatz bzw. eine pilzartige Form auf. Diese Form ist aus mehreren Gründen vorteilhaft: erstens wird hierdurch das passgenaue Anordnen des kompakten Moduls erleichtert, da eine entsprechend komplementär ausgebildete Aussparung in dem mobilen Token existiert und das kompakte Modul beim Anordnen von selbst in die richtige Anordnung gebracht wird. Zweitens können auf einer Unterseite eines Überstands des kompakten Moduls elektrische Kontakte angeordnet sein, welche mit komplementären Kontakten auf einer Oberseite der Aussparung des mobilen Tokens in Kontakt gebracht werden können. Dies ermöglicht es beispielsweise Bereiche vorzusehen, welche ausschließlich zum Ausbilden eines elektrischen Kontaktes vorgesehen sind und wiederum andere Bereiche, welche einer mechanischen Verbindung dienen.

In einer weiterbildenden Ausführungsform ist hierzu vorgesehen, dass die T-Form durch Ausfräsen entsprechender Aussparungen nach dem unlösbaren Verfügen zum kompakten Modul erzeugt wird. Das kompakte Modul, welches nach dem unlösbaren Fügen beispielsweise als rechteckiger Quader vorliegt, wird in seine finale Form gebracht, indem Bereiche, in denen die Aussparungen liegen sollen, weggefräst werden. Insbesondere ermöglicht dies eine Massenproduktion, da eine große Stückzahl an kompakten Modulen erst zusammen, beispielsweise in einem Mehrfachnutzen, hergestellt werden kann und anschließend vereinzelt werden kann. Die vereinzelten kompakten Module werden dann jeweils mittels eines Frässchrittes in eine T-Form gebracht und in die jeweiligen mobilen Token eingebracht.

In einigen Ausführungsformen ist vorgesehen, dass zum Verbinden des kompakten Moduls mit dem mobilen Token ein hierfür ausgebildeter Teil einer Oberfläche des kompakten Moduls mit einem hierfür komplementär ausgebildeten Teil einer Oberfläche der Aussparung des mobilen Tokens verrastet ist bzw. verrastet wird. Hierzu umfassen sowohl das kompakte Modul als auch der mobile Token über entsprechend komplementär ausgebildete Rastelemente, welche beim Anordnen des kompakten Moduls in der Aussparung miteinander verrasten. Der Vorteil eines Verrastens bzw. solcher Rastelemente liegt in einem leichteren Verbinden des kompakten Moduls mit dem mobilen Token.

Alternativ oder zusätzlich kann vorgesehen sein, dass zum Verbinden des kompakten Moduls mit dem mobilen Token ein hierfür ausgebildeter Teil einer Oberfläche des kompakten Moduls mit einem hierfür komplementär ausgebildeten Teil einer Oberfläche der Aussparung des mobilen Tokens verklebt ist oder verklebt wird. Eine solche Klebeverbindung hat den Vorteil, dass eine mechanisch stabilere Verbindung zwischen dem kompakten Modul und dem mobilen Token ausgebildet wird bzw. ausgebildet ist.

In einer bevorzugten Ausführungsform ist vorgesehen, dass die Schaltungsträgerlage zumindest im Bereich des Sicherheitscontrollers einen Sichtschutz aufweist. Dieser Sichtschutz verhindert, dass der Sicherheitscontroller von außen einsehbar ist, bzw. Licht von außen zum Sicherheitscontroller eindringt. Auf diese Weise können lichtbasierte Attacken (z.B. Laserattacken) verhindert werden. Beispielsweise können als Sichtschutz auf einer Seite der Schaltungsträgerlage, welche der Seite mit dem Sicherheitscontroller gegenüberliegt, Kupferleiterbahnen aufgebracht werden, welche den Bereich, in dem der Sicherheitscontroller liegt, abdecken. Kupferleiterbahnen bieten hierbei einen guten Sichtschutz.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Wert- oder Sicherheitsdokumentenrohlings mit einer Dokumentenkarte als mobilem Token in einer Seitenansicht;
- Fig. 2: eine schematische Darstellung der in der Fig. 1 gezeigten Ausführungsform des Wert- oder Sicherheitsdokumentenrohlings in einer Draufsicht;
- Fig. 3: eine schematische Darstellung eines Ausführungsbeispiels des kompakten Moduls;
- Fig. 4: eine schematische Darstellung eines weiteren Ausführungsbeispiels des kompakten Moduls;
- Fig. 5: eine schematische Darstellung eines weiteren Ausführungsbeispiels des kompakten Moduls;
- Fig. 6: eine schematische Darstellung eines weiteren Ausführungsbeispiels des kompakten Moduls;
- Fig. 7: eine schematische Darstellung einer Ausführungsform des Wert- oder Sicherheitsdokumentenrohlings mit einem Ring als mobilem Token in einer Seitenansicht;
- Fig. 8: ein schematisches Ablaufdiagramm einer Ausführungsform des Verfahrens zum Herstellen des Wert- oder Sicherheitsdokumentenrohlings.

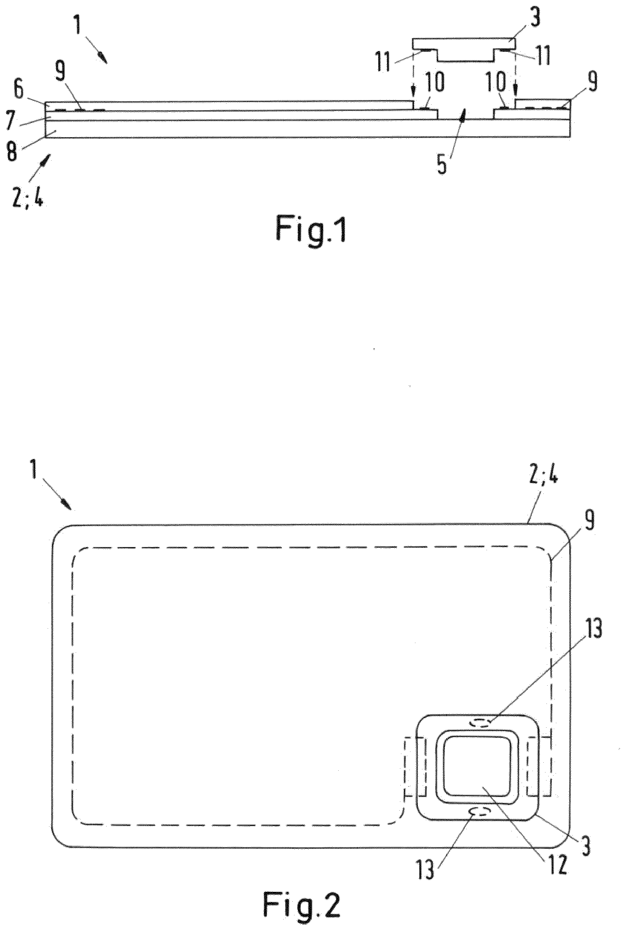

Fig. 1 zeigt eine schematische Darstellung einer Ausführungsform des Wert- oder Sicherheitsdokumentenrohlings 1 in einer Seitenansicht, Fig. 2 zeigt die zugehörige Draufsicht. Der Wert- oder Sicherheitsdokumentenrohling 1 umfasst einen mobilen Token 2 und ein kompaktes Modul 3. Der mobile Token 2 ist eine Dokumentenkarte 4, beispielsweise im ID-1-Format. Zur besseren Darstellung ist das kompakte Modul 3 separat vom mobilen Token 2 dargestellt; im fertigen Wert- oder Sicherheitsdokumentenrohling 1 ist das kompakte Modul 3 in eine Aussparung 5 in der Dokumentenkarte 4 eingefügt und mit dieser verbunden (angedeutet durch die Pfeile).

Das kompakte Modul 3 und die Aussparung 5 weisen bevorzugt eine umlaufende T-Form auf.

Die Dokumentenkarte 4 besteht aus Kunststoffmaterial, beispielsweise aus Polycarbonat. Die Dokumentenkarte 4 umfasst drei Materialschichten 6, 7, 8. Auf einer Oberseite der innenliegenden Materialschicht 7 ist eine am Außenrand der Dokumentenkarte 4 entlanglaufende Antenne 9 aufgebracht, deren Kontakte 10 auf einer Außenseite innerhalb der Aussparung 5 angeordnet sind. Die Antenne 9 kann beispielsweise auf die innenliegende Materialschicht 7 aufgedruckt sein. Auf einer der Dokumentenkarte 4 zugewandten Seite des kompakten Moduls 3 weist das kompakte Modul 3 zu den Kontakten 10 der Antenne 9 komplementäre Kontakte 11 auf, welche beim Anordnen des kompakten Moduls 3 in die Aussparung 5 mit den Kontakten 10 der Antenne 9 in elektrischen Kontakt gebracht werden. Über die Kontakte 10, 11 wird eine elektrische Verbindung zwischen einer elektronischen Schaltung im kompakten Modul 3 und der Antenne 9 hergestellt.

Bevorzugt umfasst das kompakte Modul 3 an einer Oberseite einen biometrischen Sensor 12. Dies kann insbesondere ein Sensor zum Erfassen eines Fingerabdrucks eines Benutzers sein. Ferner umfasst das kompakte Modul 3 bevorzugt einen Sicherheitscontroller (nicht gezeigt) und ein visuelles Rückkopplungselement 13, welches beispielsweise Leuchtdioden (LEDs) umfasst.

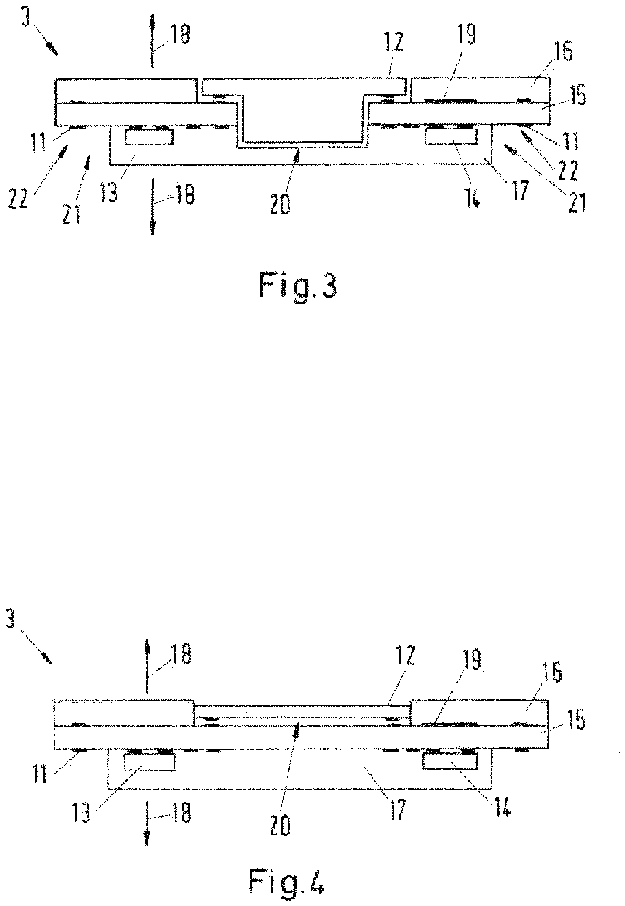

Fig. 3 zeigt eine schematische Darstellung eines Ausführungsbeispiels des kompakten Moduls 3. In dieser bevorzugten Ausführungsform des kompakten Moduls 3 umfasst das kompakte Modul 3 als biometrischen Sensor 12 einen Fingerabdrucksensor, einen Sicherheitscontroller 14 und visuelle Rückkopplungselemente 13 in Form von LEDs. Das kompakte Modul 3 besteht aus einer innenliegenden als Schaltungsträgerlage ausgebildeten ersten Dokumentenlage 15. Die erste Dokumentenlage 15 ist mit aktiven und passiven elektronischen Bauelementen bestückt. Die als Schaltungsträgerlage ausgebildete erste Dokumentenlage 15 ist zwischen eine zweite Dokumentenlage 16 und eine dritte Dokumentenlage 17 angeordnet und mit diesen unlösbar zusammengefügt, insbesondere zusammenlaminiert. Die Dokumentenlagen 15, 16, 17 umfassen erfindungsgemäß Faserverbundwerkstoffe und sind nach dem unlösbaren Fügen hermetisch zu dem kompakten Modul 3 verkapselt und hierdurch mechanisch äußerst stabil. Dies wird insbesondere durch ein Verpressen (Laminieren einzelner die Dokumentenlagen 15, 16, 17 bildenden Folienlagen unter hohem Druck und hoher Temperatur) mit sogenannten Prepregs und FR4-Lagen erreicht.

Das kompakte Modul 3 weist eine umlaufende T-Form auf. Hierzu wurden in der dritten Dokumentenlage 17 nach dem Verpressen die in der Darstellung links und rechts liegenden Bereiche 21 sowie in der Figur nicht dargestellte Bereiche, welche vor und hinter der Figurenebene liegen, weggefräst, sodass eine Breite und eine Tiefe der dritten Dokumentenlage 17 geringer ist als eine Breite und eine Tiefe der darüber angeordneten ersten Dokumentenlage 15 und zweiten Dokumentenlage 16. Durch die T-Form (bzw. Pilzform) wird ein Einpassen in den mobilen Token 2 (vgl. Fig. 1) erleichtert. Auf der Unterseite der Überstände 22 der ersten Dokumentenlage 15 sind elektrische Kontakte 11 ausgebildet, welche einer elektrischen Verbindung mit komplementären Kontakten einer Antenne des mobilen Tokens 2 (Fig. 1) dienen.

Das von den LEDs emittierte Licht 18 kann idealerweise auf beiden Seiten des kompakten Modul 3 austreten und als visuelle Rückkopplung dienen.

In einer bevorzugten Ausführungsform wird sowohl ein Sichtschutz 19 als auch ein zusätzlicher mechanischer Schutz der innenliegenden, dünnen integrierten Schaltkreise durch zusätzliche Metallschichten auf der die Schaltungsträgerlage bildenden ersten Dokumentenlage 15 erreicht. Ein solcher Sichtschutz 19 erschwert optisch basierte Attacken (z.B. Laserattacke) auf den Sicherheitscontroller 14. Der Sichtschutz 19 kann beispielsweise durch Aufbringen von Kupferleiterbahnen in größeren Bereichen auf der ersten die Schaltungsträgerlage bildenden Dokumentenlage 15 ausgebildet werden, wobei die Kupferleiterbahnen auf einer dem Sicherheitscontroller 14 gegenüberliegenden Seite der Schaltungsträgerlage aufgebracht werden oder aufgebracht sind.

In der in der Fig. 3 gezeigten Ausführungsform weist der als Fingerabdrucksensor ausgebildete biometrische Sensor 12 ebenfalls eine T-Form. Der Fingerabdrucksensor wird nach dem Verpressen (Laminieren) der Dokumentenlagen 15, 16, 17 zu dem kompakten Modul 3 in eine hierfür ausgefräste Sensoraussparung 19 angeordnet und über einander gegenüberliegende komplementär ausgebildete Sensorkontakte nach dem bereits für die elektrische Verbindung des kompakten Moduls 3 mit dem mobilen Token beschriebenen Prinzip mit dem restlichen Teil der elektronischen Schaltung verbunden.

Fig. 4 zeigt eine schematische Darstellung eines weiteren Ausführungsbeispiels des kompakten Moduls 3. Mit den anderen Figuren übereinstimmende Bezugszeichen bezeichnen hierbei gleiche Merkmale. In der sonst zur Fig. 3 identischen Ausführungsform ist der als Fingerabdrucksensor ausgebildete biometrische Sensor 12 flach ausgebildet. Der biometrische Sensor 12 ist in eine hierfür in die zweite Dokumentenlage 16 eingefräste Sensoraussparung 20 angeordnet und über elektrische Kontakte mit dem Rest der elektronischen Schaltung verbunden.

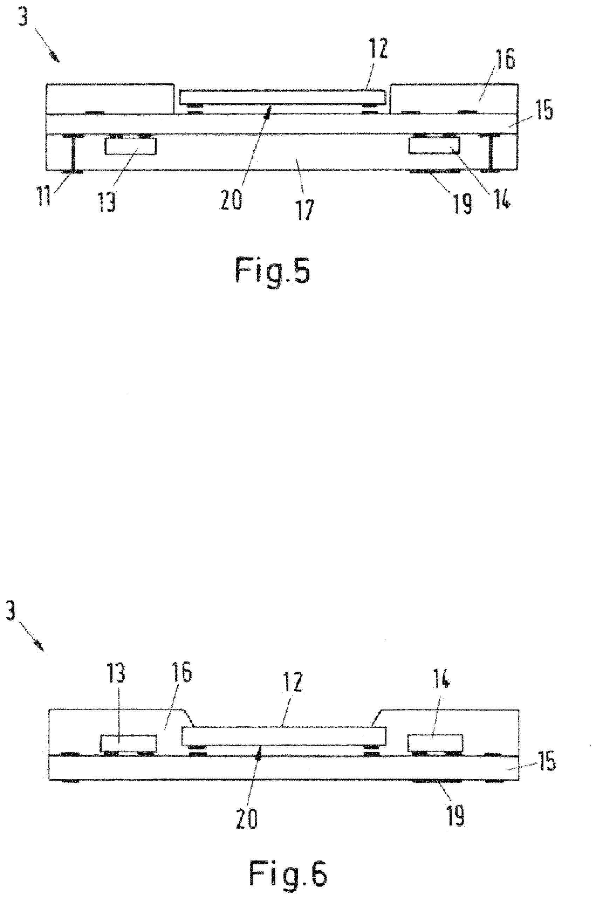

Fig. 5 zeigt eine schematische Darstellung eines weiteren Ausführungsbeispiels des kompakten Moduls 3. Der Aufbau ist prinzipiell der gleiche wie bei der in Fig. 4 gezeigten Ausführungsform. Mit den anderen Figuren übereinstimmende Bezugszeichen bezeichnen hierbei gleiche Merkmale. Jedoch weist das kompakte Modul 3 eine quaderförmige Blockform auf. Die elektrischen Kontakte 11 sind deshalb durch die zweite Dokumentenlage 17 hindurch zur Unterseite des kompakten Moduls 3 geführt.

Alternativ zu einer elektrischen Kontaktierung der Antenne 9 in den beschriebenen Ausführungsformen kann eine Verbindung zwischen Antenne 9 und elektronischer Schaltung des kompakten Moduls 3 auch induktiv über entsprechend hierfür vorgesehene induktive Kopplungselemente in dem mobilen Token und dem kompakten Modul 3 erfolgen.

In Fig. 6 ist eine schematische Darstellung eines weiteren Ausführungsbeispiels des kompakten Moduls 3 gezeigt. Mit den anderen Figuren übereinstimmende Bezugszeichen bezeichnen hierbei gleiche Merkmale. Im Unterschied zu den in den Figuren 3 bis 5 gezeigten Ausführungsbeispielen weist das kompakte Modul 3 in diesem Ausführungsbeispiel keine dritte Dokumentenlage auf, sodass das kompakte Modul 3 nur eine erste Dokumentenlage 15 und eine zweite Dokumentenlage 16 umfasst. Der flache biometrische Sensor 12 ist hierbei in eine Sensoraussparung 20 in der zweiten Dokumentenlage 16 eingebracht.

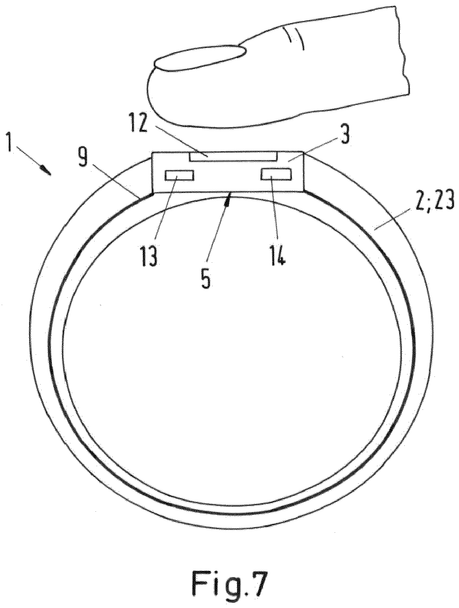

In Fig. 7 ist eine schematische Darstellung einer Ausführungsform des Wert- oder Sicherheitsdokumentenrohlings 1 mit einem Ring 23 als mobilem Token 2 in einer Seitenansicht gezeigt. In eine Oberseite des Rings 23 ist das kompakte Modul 3 in eine hierfür vorgesehene Aussparung 5 angeordnet und mit dem Ring 23 verbunden. Das kompakte Modul 3 umfasst beispielsweise einen als Fingerabdrucksensor ausgebildeten biometrischen Sensor 12 sowie ein als LED ausgebildetes visuelles Rückkopplungselement 13 und einen Sicherheitscontroller 14. In den Ring 23 ist eine umlaufende Antenne 9 eingelassen, welche mit dem elektronischen Schaltkreis im kompakten Modul 3 elektrisch oder induktiv verbunden ist.

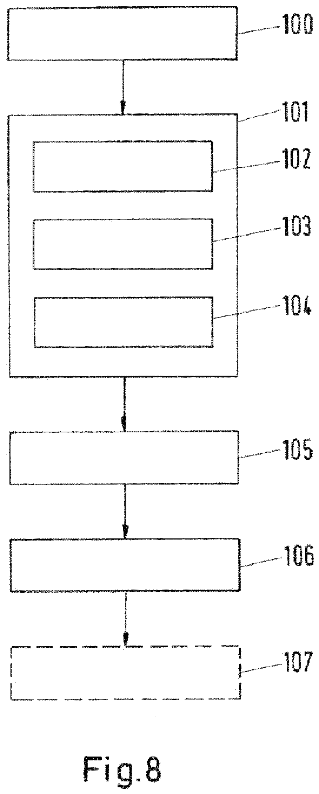

Fig. 8 zeigt ein schematisches Ablaufdiagramm einer Ausführungsform des Verfahrens zum Herstellen des Wert- oder Sicherheitsdokumentenrohlings mit einer elektronischen Schaltung. In einem ersten Verfahrensschritt 100 wird ein mobiler Token bereitgestellt. Dies kann beispielsweise eine Dokumentenkarte, ein Ring oder ein Schlüsselanhänger sein.

In einem Verfahrensschritt 101 wird ein kompaktes Modul hergestellt, welches die elektronische Schaltung umfasst. Bevorzugt umfasst das kompakte Modul einen biometrischen Sensor, beispielsweise einen Fingerabdrucksensor, einen Sicherheitscontroller und ein visuelles Rückkopplungselement. Im Rahmen dieses Verfahrensschritts 101 wird in einem Verfahrensschritt 102 eine erste Dokumentenlage in Form einer die elektronische Schaltung tragenden Schaltungsträgerlage und mindestens eine zweite Dokumentenlage bereitgestellt, wobei die erste Dokumentenlage und die mindestens eine zweite Dokumentenlage aus einem Faserverbundwerkstoff gebildet sind. In einem nachfolgenden Verfahrensschritt 103 werden die Dokumentenlagen gestapelt.

Ist ferner eine dritte Dokumentenlage aus dem Faserverbundwerkstoff vorhanden, so kann vorgesehen sein, dass in diesem Verfahrensschritt 103 die erste Dokumentenlage zwischen die mindestens eine zweite Dokumentenlage und die dritte Dokumentenlage angeordnet wird.

Nach dem Stapeln werden die Dokumentenlagen im Verfahrensschritt 104 zu einem kompakten Modul unlösbar gefügt, insbesondere laminiert.

Es kann vorgesehen sein, dass im Anschluss an das unlösbare Fügen an hierfür vorgesehenen Stellen des kompakten Moduls Ausfräsungen vorgenommen werden, um beispielsweise einen biometrischen Sensor einzufügen.

In einem Verfahrensschritt 105 wird eine zu einer Form des kompakten Moduls komplementäre Aussparung auf einer Außenseite des mobilen Token ausgebildet. Dies kann beispielsweise mittels eines Chipimplanters und "Card Milling"-Verfahren erfolgen.

Im Verfahrensschritt 106 erfolgt das Anordnen des kompakten Moduls in der Aussparung in dem mobilen Token und Verbinden mit dem mobilen Token. In diesem Verfahrensschritt 106 werden ebenfalls notwendige elektrische Verbindungen, beispielsweise zu einer in dem mobilen Token angeordneten Antenne, hergestellt, beispielsweise indem komplementär ausgebildete elektrische Kontakte miteinander in Verbindung gebracht werden.

Zum Verbinden des kompakten Moduls und des mobilen Tokens können das kompakte Modul und der mobile Token beispielsweise komplementäre Rastelemente aufweisen, welche miteinander in Eingriff gebracht werden, sodass das kompakte Modul mit dem mobilen Token verrastet. Alternativ oder zusätzlich können das kompakte Modul und der mobile Token auch miteinander verklebt werden, beispielsweise an hierfür vorgesehenen einander gegenüberliegenden Flächen.

In einem nachfolgenden Verfahrensschritt 107 kann der fertige Wert- oder Sicherheitsdokumentenrohling individualisiert werden, indem eine authentifizierende Information auf- oder eingebracht wird. Auf diese Weise entsteht ein Wert- oder Sicherheitsdokument. Dieser Schritt muss nicht am selben Ort wie das Herstellen des Wert- oder Sicherheitsdokumentenrohlings erfolgen.

### Bezugszeichenliste

- 1: Wert- oder Sicherheitsdokumentenrohling
- 2: mobiler Token
- 3: kompaktes Modul
- 4: Dokumentenkarte
- 5: Aussparung
- 6: Materialschicht
- 7: Materialschicht
- 8: Materialschicht
- 9: Antenne
- 10: Kontakt
- 11: Kontakt
- 12: biometrischer Sensor
- 13: visuelles Rückkopplungselement
- 14: Sicherheitscontroller
- 15: erste Dokumentenlage
- 16: zweite Dokumentenlage
- 17: dritte Dokumentenlage
- 18: Licht
- 19: Sichtschutz
- 20: Sensoraussparung
- 21: Bereich
- 22: Überstand
- 23: Ring

## Patentansprüche

1. Verfahren zum Herstellen eines Wert- oder Sicherheitsdokumentenrohlings (1) mit einer elektronischen Schaltung, umfassend die folgenden Schritte:
(a) Bereitstellen eines mobilen Token (2),
(b) Herstellen eines kompakten Moduls (3), umfassend die folgenden Teilschritte:
(b1) Bereitstellen einer ersten Dokumentenlage (15) in Form einer die elektronische Schaltung tragenden Schaltungsträgerlage und mindestens einer zweiten Dokumentenlage (16), wobei die erste Dokumentenlage (15) und die mindestens eine zweite Dokumentenlage (16) aus einem Faserverbundwerkstoff gebildet sind, wobei die Schaltungsträgerlage mehrere separat gehauste elektronische Bauelemente sowie die Bauelemente verbindende Leiterbahnen trägt oder umfasst,
(b2) Stapeln der Dokumentenlagen (15, 16, 17),
(b3) Unlösbares Fügen der ersten Dokumentenlage (15) und der mindestens einen zweiten Dokumentenlage (16) zu einem kompakten Modul (3),
(c) Ausbilden einer zum kompakten Modul (3) komplementären Aussparung (5) auf einer Außenseite des mobilen Token (3),
(d) Anordnen des kompakten Moduls (3) in der Aussparung in dem mobilen Token (2) und Verbinden mit dem mobilen Token (2).

2. Wert- oder Sicherheitsdokumentenrohling (1) mit einer elektronischen Schaltung, umfassend:
einen mobilen Token (2),
ein kompaktes Modul (3), wobei das kompakte Modul (3) eine erste Dokumentenlage (15) in Form einer die elektronische Schaltung tragenden Schaltungsträgerlage und mindestens eine zweite Dokumentenlage (16) umfasst,
wobei die erste Dokumentenlage (15) und die mindestens eine zweite Dokumentenlage (16) aus einem Faserverbundwerkstoff gebildet sind,
wobei die erste Dokumentenlage (15) und die mindestens eine zweite Dokumentenlage (16) gestapelt angeordnet sind,
wobei die erste Dokumentenlage (15) und die mindestens eine zweite Dokumentenlage (16) unlösbar zu dem kompakten Modul (17) gefügt sind;
**dadurch gekennzeichnet, dass**
die Schaltungsträgerlage mehrere separat gehauste elektronische Bauelemente sowie die Bauelemente verbindende Leiterbahnen trägt oder umfasst und
das kompakte Modul (3) in einer zum kompakten Modul (3) komplementären Aussparung (5) auf einer Außenseite des mobilen Token (2) angeordnet und mit dem mobilen Token (2) verbunden ist.

3. Wert- oder Sicherheitsdokumentenrohling (1) nach Anspruch 2, **dadurch gekennzeichnet, dass** der mobile Token (2) eine Dokumentenkarte (4) aus Kunststoffmaterial ist.

4. Wert- oder Sicherheitsdokumentenrohling (1) nach Anspruch 2, **dadurch gekennzeichnet, dass** der mobile Token (2) ein Ring (23) ist.

5. Wert- oder Sicherheitsdokumentenrohling (1) nach einem der Ansprüche 2 bis 4, **dadurch gekennzeichnet, dass** der mobile Token (2) eine darin eingefügte Antenne (9) umfasst, wobei die Antenne (9) mit der elektronischen Schaltung verbunden ist.

6. Wert- oder Sicherheitsdokumentenrohling (1) nach Anspruch 5, **dadurch gekennzeichnet, dass** die Antenne (9) über hierfür vorgesehene elektrische Kontakte (10, 11) mit der elektronischen Schaltung verbunden ist.

7. Wert- oder Sicherheitsdokumentenrohling (1) nach Anspruch 5, **dadurch gekennzeichnet, dass** die Antenne (9) über hierfür vorgesehene induktive Kopplungselemente mit der elektronischen Schaltung verbunden ist.

8. Wert- oder Sicherheitsdokumentenrohling (1) nach einem der Ansprüche 2 bis 7, **dadurch gekennzeichnet, dass** das kompakte Modul (3) eine T-Form aufweist.

9. Wert- oder Sicherheitsdokumentenrohling (1) nach einem der Ansprüche 2 bis 8, **dadurch gekennzeichnet, dass** das kompakte Modul (3) zumindest im Bereich eines Sicherheitscontrollers (14) einen Sichtschutz (19) aufweist, wobei der Sicherheitscontroller (14) komplexe Schaltungen gegen eine Manipulation absichert, wobei der Sicherheitscontroller (14) die Ausführung kryptographischer Operationen ermöglicht, sowie einen sicheren Datenspeicher und sichere Verarbeitungsfunktionen bereitstellt.

10. Wert- oder Sicherheitsdokumentenrohling (1) nach einem der Ansprüche 2 bis 9, **dadurch gekennzeichnet, dass** das kompakte Modul (3) über einen hierfür ausgebildeten Teil einer Oberfläche des kompakten Moduls (3) mit einem hierfür komplementär ausgebildeten Teil einer Oberfläche der Aussparung (5) des mobilen Tokens (2) verrastet ist.

11. Wert- oder Sicherheitsdokumentenrohling (1) nach einem der Ansprüche 2 bis 10, **dadurch gekennzeichnet, dass** das kompakte Modul (3) über einen hierfür ausgebildeten Teil einer Oberfläche des kompakten Moduls (3) mit einem hierfür komplementär ausgebildeten Teil einer Oberfläche der Aussparung (5) des mobilen Tokens (2) verklebt ist.

12. Wert- oder Sicherheitsdokument, umfassend einen Wert- oder Sicherheitsdokumentenrohling (1) nach einem der Ansprüche 2 bis 11, wobei der Wert- oder Sicherheitsdokumentenrohling (1) zum Ausbilden des Wert- oder Sicherheitsdokuments mit authentifizierenden Informationen versehen und hierdurch individualisiert ist.

## Claims

1. A method for producing a value or security document blank (1) having an electronic circuit, said method comprising the following steps:
(a) providing a mobile token (2),
(b) producing a compact module (3), comprising the following sub-steps:
(b1) providing a first document layer (15) in the form of a circuit carrier layer supporting the electronic circuit and at least one second document layer (16), wherein the first document layer (15) and the at least one second document layer (16) are formed from a fibre composite material, wherein the circuit carrier layer carries or comprises a plurality of separately housed electronic components and conductor tracks connecting the components,
(b2) stacking the document layers (15, 16, 17),
(b3) non-releasably joining the first document layer (15) and the at least one second document layer (16) to form a compact module (3),
(c) forming a recess (5) complementary to the compact module (3) on an outer side of the mobile token (2),
(d) arranging the compact module (3) in the recess in the mobile token (2) and connecting to the mobile token (2).

2. The value or security document blank (1) having an electronic circuit, comprising:
a mobile token (2),
a compact module (3), wherein the compact module (3) comprises a first document layer (15) in the form of a circuit carrier layer carrying the electronic circuit and at least one second document layer (16), wherein the first document layer (15) and the at least one second document layer (16) are formed from a fibre composite material,
wherein the first document layer (15) and the at least one second document layer (16) are arranged stacked,
wherein the first document layer (15) and the at least one second document layer (16) are joined non-releasably to form the compact module (17), **characterised in that** the circuit carrier layer carries or comprises a plurality of separately housed electronic components and also conductor tracks connecting the components, and
the compact module (3) is arranged in a recess (5) complementary to the compact module (3) on an outer side of the mobile token (2) and is connected to the mobile token (2).

3. The value or security document blank (1) according to claim 2, **characterised in that** the mobile token (2) is a document card (4) made of plastics material.

4. The value or security document blank (1) according to claim 2,
**characterised in that** the mobile token (2) is a ring (23).

5. The value or security document blank (1) according to any one of claims 2 to 4, **characterised in that** the mobile token (2) comprises an antenna (9) inserted thereinto, wherein the antenna (9) is connected to the electronic circuit.

6. The value or security document (1) according to claim 5, **characterised in that** the antenna (9) is connected to the electronic circuit via electrical contacts (10, 11) provided for this purpose.

7. The value or security document blank (1) according to claim 5, **characterised in that** the antenna (9) is connected to the electronic circuit via inductive coupling elements provided for this purpose.

8. The value or security document blank (1) according to any one of claims 2 to 7, **characterised in that** the compact module (3) has a T-shape.

9. The value or security document blank (1) according to any one of claims 2 to 8, **characterised in that** the compact module (3) has a screen (19) at least in the region of a safety controller (14), wherein the safety controller (14) protects complex circuits against manipulation, wherein the safety controller (14) allows cryptographic operations to be performed and also provides a secure data memory and secure processing functions.

10. The value or security document blank (1) according to any one of claims 2 to 9, **characterised in that** the compact module (3) is latched via a part of a surface of the compact module (3) configured for this purpose to a complementary part of a surface of the recess (5) of the mobile token (2).

11. The value or security document blank (1) according to any one of claims 2 to 10, **characterised in that** the compact module (3) is glued via a part of a surface of the compact module (3) configured for this purpose to a complementary part of a surface of the recess (5) of the mobile token (2).

12. A value or security document, comprising a value or security document blank (1) according to any one of claims 2 to 11, wherein the value or security document blank (1) is provided with authenticating information and is hereby individualised in order to form the value or security document.

## Revendications

1. Procédé de fabrication d'une ébauche de document de valeur ou de sécurité (1) munie d'un circuit électronique, comprenant les étapes suivantes :
(a) fourniture d'un jeton mobile (2),
(b) fabrication d'un module compact (3) comprenant les étapes partielles suivantes :
(b1) fourniture d'un première couche de document (15) sous la forme d'une couche de support de circuit portant le circuit électronique et d'au moins une deuxième couche de document (16), où la première couche de document (15) et l'au moins une deuxième couche de document (16) sont constituées d'un matériau composite renforcé de fibres, où la couche de support de circuit porte ou comprend plusieurs composants électroniques logés séparément ainsi que des pistes conductrices reliant les composants,
(b2) empilement des couches de document (15, 16, 17),
(b3) assemblage indissociable de la première couche de document (15) et de l'au moins une deuxième couche de document (16) pour donner un module compact (3),
(c) réalisation d'un évidement (5) complémentaire au module compact (3) sur un côté extérieur du jeton mobile (3),
(d) disposition du module compact (3) dans l'évidement dans le jeton mobile (2) et liaison avec le jeton mobile (2).

2. Ébauche de document de valeur ou de sécurité (1) munie d'un circuit électronique, comprenant :
un jeton mobile (2),
un module compact (3), où le module compact (3) comprend une première couche de document (15) sous la forme d'une couche de support de circuit portant le circuit électronique et au moins une deuxième couche de document (16), où la première couche de document (15) et l'au moins une deuxième couche de document (16) sont constituées d'un matériau composite renforcé de fibres,
dans laquelle la première couche des documents (15) et l'au moins une deuxième couche de document (16) sont disposées empilées,
dans laquelle la première couche de document (15) et l'au moins une deuxième couche de document (16) sont assemblées au module compact (17) de manière indissociable ;
**caractérisée en ce que**
la couche de support de circuit porte ou comprend plusieurs composants électroniques logés séparément ainsi que des pistes conductrices reliant les composants, et
le module compact (3) est disposé dans un évidement (5) complémentaire au module compact (3) sur un côté extérieur du jeton mobile (2) et est relié avec le jeton mobile (2).

3. Ébauche de document de valeur ou de sécurité (1) selon la revendication 2, **caractérisée en ce que** le jeton mobile (2) est une carte de document (4) à base d'une matière plastique.

4. Ébauche de document de valeur ou de sécurité (1) selon la
revendication 2, **caractérisée en ce que** le jeton mobile (2) est un anneau (23).

5. Ébauche de document de valeur ou de sécurité (1) selon l'une des revendications 2 à 4, **caractérisée en ce que** le jeton mobile (2) comprend une antenne (9) y étant introduite, où l'antenne (9) est reliée avec le circuit électronique.

6. Ébauche de document de valeur ou de sécurité (1) selon la revendication 5, **caractérisée en ce que** l'antenne (9) est reliée avec le circuit électronique par le biais de contacts électriques (10, 11) prévus à cet effet.

7. Ébauche de document de valeur ou de sécurité (1) selon la revendication 5, **caractérisée en ce que** l'antenne (9) est reliée avec le circuit électronique par le biais d'éléments de couplage inductifs prévus à cet effet.

8. Ébauche de document de valeur ou de sécurité (1) selon l'une des revendications 2 à 7, **caractérisée en ce que** le module compact (3) présente une forme en T.

9. Ébauche de document de valeur ou de sécurité (1) selon l'une des revendications 2 à 8, **caractérisée en ce que** le module compact (3) présente une protection contre les regards indiscrets (19) au moins dans la zone d'un dispositif de contrôle de sécurité (14), où le dispositif de contrôle de sécurité (14) assure des commutations complexes contre une manipulation, où le dispositif de contrôle de sécurité (14) permet l'exécution d'opérations cryptographiques et fournit également une mémoire de données sécurisée et des fonctions de traitement sécurisées.

10. Ébauche de document de valeur ou de sécurité (1) selon l'une des revendications 2 à 9, **caractérisée en ce que** le module compact (3), par une partie d'une surface du module compact (3) prévue à cet effet, est verrouillé avec une partie d'une surface de l'évidement (5) du jeton mobile (2) formée de manière complémentaire à cet effet.

11. Ébauche de document de valeur ou de sécurité (1) selon l'une des revendications 2 à 10, **caractérisée en ce que** le module compact (3), par une partie d'une surface du module compact (3) prévue à cet effet, est collé avec une partie d'une surface de l'évidement (5) du jeton mobile (2) formée de manière complémentaire à cet effet.

12. Document de valeur ou de sécurité comprenant une ébauche de document de valeur ou de sécurité (1) selon l'une des revendications 2 à 11, où l'ébauche de document de valeur ou de sécurité (1), pour la réalisation du document de valeur ou de sécurité, est pourvue d'informations d'authentification et est de ce fait personnalisée.
